# FASCICULE DE BREVET EUROPEEN

(11) **EP 1 079 697 B1**
(45) Date de publication et mention de la délivrance du brevet: **02.01.2003**
(21) Numéro de dépôt: 99919316.2
(22) Date de dépôt: 10.05.1999
(51) Int. Cl.: A23C 19/08, A23C 19/06, A23C 19/09

(54) **PROCEDE DE FABRICATION DE NOUVEAUX PRODUITS FROMAGERS PAR TRAITEMENT D'UNE MATIERE DE DEPART**
VERFAHREN ZUR HERSTELLUNG NEUER KÄSEPRODUKTE DURCH BEHANDLUNG EINES AUSGANGSPRODUKTS
METHOD FOR MAKING NOVEL CHEESE PRODUCTS BY PROCESSING AN INITIAL MATERIAL

(30) Priorité: 19.05.1998 FR 9806319
(43) Date de publication de la demande: 07.03.2001
(73) Titulaire: FROMAGERIES BEL, 75008 Paris (FR)
(72) Inventeur: GAULIER, Jean-Paul, F-53210 Soulge sur Ouette (FR)
(74) Mandataire: Jacobson, Claude
(86) Numéro de dépôt international: FR9901107
(87) Numéro de publication internationale: WO99059419

(56) Documents cités:
- EP-A- 0 535 728
- WO-A-98/53697
- DE-C- 697 488
- DE-C- 946 681
- US-A- 1 492 388
- US-A- 1 639 828
- US-A- 2 009 238
- US-A- 5 750 177
- US-E- R E16 039
- PATENT ABSTRACTS OF JAPAN vol. 010, no. 362 (C-389), 4 December 1986 (1986-12-04) & JP 61 158746 A (ROKKO BATAA KK), 18 July 1986 (1986-07-18)
- DATABASE WPI Section Ch, Week 8412 Derwent Publications Ltd., London, GB; Class D13, AN 84-072651 XP002089825 & JP 59 009138 B (SNOW BRAND MILK PROD CO LTD), 29 February 1984 (1984-02-29)
- DATABASE FSTA [Online] INTERNATIONAL FOOD INFORMATION SERVICE (IFIS), FRANFURT/MAIN, DE STAMENOV S: "Technology and composition of an emulsified dairy spread." XP002089824 & KHRANITELNA PROMISHLENOST, vol. 28, no. 6, 1979, pages 12-14,

## Description

L'invention concerne un procédé de fabrication de nouveaux produits fromagers par traitement d'une matière de départ consistant en un fromage et les produits obtenus par ce procédé.

On connaît déjà des fromages obtenus par traitement de produits fromagers issus eu traitement de lait; on peut citer comme famille la plus représentative de cette catégorie de produits celle des fromages fondus: ces derniers sont obtenus par broyage de toute catégorie de fromages issus du lait, plus spécifiquement des fromages à pâte pressée, mélange avec d'autres matières premières laitières (poudre de lait entier, partiellement ou totalement écrémée, beurre, matière grasse laitière anhydre, babeurre, concentrés protéiques, etc...) en quantité variable selon le type de produits finis que l'on veut obtenir, incorporation audit mélange de sels de fonte choisis dans la famille des polyphosphates, orthophosphates ou citrates de sodium, potassium, calcium, puis traitement thermique du mélange à des températures comprises entre 80 et 140°C pendant un temps allant de quelques secondes à plusieurs minutes, dépendant de la température. Pour la réalisation de ce procédé les sels de fonte sont utilisés pour leurs propriétés chélatantes du calcium, ce qui entraîne une solubilisation des protéines facilitant l'émulsification par un effet stabilisant sur le pH.

Toutefois l'inconvénient majeur d'un tel procédé est qu'il conduit à un type de fromages qui, malgré une valeur nutritionnelle équivalente aux produits mis en oeuvre et une possibilité de présentations variées (portions, tranches, blocs, etc) et une excellente conservation, supérieure à celle du produit initial, diffèrent totalement du produit d'origine aussi bien par leur texture que par leur goût.

Ainsi l'analyse du taux de peptisation traduisant un changement de structure des protéines au cours du procédé, mesuré par le taux d'azote non sédimentable lié à la libération des protéines solubles au cours du traitement de fabrication indique une valeur comprise entre 40 et 50, pour des fromages obtenus par des traitements thermiques supérieurs à 100°C contre des valeurs proches de 0, pour des fromages n'ayant pas subi de traitement.

Le procédé de fonte impliqué déstructure en outre fortement la matière première mise en oeuvre ce qui explique la différence de propriétés texturales et organoleptiques entre le produit d'origine et le produit final.

Afin d'obtenir des produits finaux dont les caractéristiques gustatives et texturales se rapprochent du produit d'origine tout en offrant des présentations variées et une conservation améliorée, certains auteurs ont proposé des procédés moins déstructurants. On peut ainsi citer la demande de brevet WO 95/19699 qui décrit un procédé de reconstitution de fromages à pâte pressée cuite, déclassées ou en morceaux, le procédé décrit consistant à diviser la matière première en morceaux de forme régulière, à soumettre le fromage divisé sans adjonction d'eau ni aucun autre ingrédient à des opérations de malaxage et de cisaillement contrôlés et à une cuisson à une température comprise entre 70 et 80°C de préférence dans un appareil de type cuiseur-extrudeur. Selon les auteurs, le procédé n'entraînerait aucune dégradation des protéines lors du traitement et le produit fini présenterait des caractéristiques biochimiques, physico-chimiques, et organoleptiques comparables à celles de la matière première.

Toutefois, les auteurs de la précédente invention ont établi que les températures utilisées ne sont pas, contrairement aux indications du document, sans conséquence sur l'état des protéines et la perte aromatique. En outre des essais réalisés par la demanderesse mettant en oeuvre ledit procédé ont montré que les produits obtenus présentaient une exsudation de matière grasse entraînant des présentations de produits peu attractives pour le consommateur. Cette exsudation s'explique par une mauvaise émulsification et par conséquent une mauvaise liaison de la matière grasse au réseau protéique.

En effet, des traitements thermiques à des températures de l'ordre de 70° C entraînent une dénaturation du produit ; à ces températures la texture des produits est plus proche en terme de rhéologie de celle d'un fromage fondu que de celle d'un fromage naturel.

En outre, le procédé mis en oeuvre est appliqué uniquement à des fromages à pâte pressée cuite, soit ces produits à extrait sec élevé, et, nécessite pour sa mise en oeuvre la division du fromage d'origine en morceaux de forme régulière ainsi que l'utilisation d'un appareil de cuisson-extrusion adapté.

Par ailleurs, ce procédé a comme objectif la mise au point de produits dont la texture et les qualités aromatiques sont le plus proches possibles de la matière première de départ.

Le brevet EP 0 260 194 se propose de résoudre les difficultés de mauvaise tenue d'une émulsion de ce type par incorporation d'un agent émulsifiant et décrit un procédé comportant une première étape d'addition de protéines au fromage et une seconde étape de traitement mécanique de mise en forme, le fromage de départ étant sélectionné parmi les fromages affinés ayant au moins 50 % de matières sèches et plus spécialement parmi les fromages à pâte pressée cuite ou non, auxquels on rajoute à raison de 5 à 10 % des protéines choisies parmi les protéines ayant une fonction émulsifiante à une température inférieure à leur température de coagulation, ces deux matières premières étant mélangées afin de permettre un traitement mécanique de mise en forme ultérieure du fromage et l'obtention d'un fromage ayant une texture, un goût et une couleur substantiellement identiques à celles du fromage de départ ainsi qu'une forme spécifique résultant du traitement mécanique employé.

Dans ce procédé, les protéines sont additionnées au fromage à traiter lorsque celui-ci est à une température comprise entre 40 et 80°C, de préférence 80°C, et le mélange est traité mécaniquement à une température comprise entre 40 et 50°C. L'agent émulsifiant utilisé est choisi de préférence dans la famille des séroprotéines, ces dernières étant sélectionnées pour leur propriétés émulsifiantes à l'exclusion de toutes les autres propriétés. Le procédé décrit dans le brevet EP 0 260 194 permet donc l'obtention d'une émulsion de meilleure qualité que celle du brevet WO 95/19 699 mais présente l'inconvénient d'être limité à des fromages ayant un extrait sec Supérieur à 50 %. En outre, l'adjonction au fromage à traiter de séroprotéines à un taux compris entre 5 et 10 % n'est pas sans incidence sur la présence de goûts différents de ceux de la matière première de départ (goût lactosé). De plus, le spectre d'action des séroprotéines n'est pas suffisant à la réalisation d'une émulsion complète éliminant toute exsudation ultérieure de matière grasse à la surface du produit. Ce défaut se retrouve dans le goût des produits obtenus (produit gras en bouche, très pâteux) ce qui peut être acceptable pour des produits composites obtenus par extrusion de la pâte fromagère et d'un fourrage fromager ou de nature différente, mais devient rédhibitoire pour un produit essentiellement à base de fromage.

Enfin, EP 0 535 728 décrit la réalisation de produits fromagers obtenus à partir d'un fromage naturel ayant la texture et les qualités aromatiques de celui-ci, par mélange de matières premières d'origines différentes à une température inférieure à la température de pasteurisation, soit 35 à 65° C. La réalisation de tels produits nécessite la mise en oeuvre d'un mélange de 30 à 40 % de fromage non affiné contenant 60 % d'humidité et d'une source protéique pouvant être du fromage affiné tel que du cheddar. Après traitement, le fromage est emballé et le produit final présente une teneur en eau comprise entre 40 et 60 % et est destiné à être tranché et étalé sur une tartine.

Il est par ailleurs connu de l'homme de métier des produits appelés "cold-pack cheese" commercialisés essentiellement aux Etats-Unis qui consistent en produits réalisés à partir de mélange de fromages sans chauffage.

On peut citer à cet effet le brevet US 1 522 383 qui décrit la réalisation d'un "cold-pack", par émulsification à basse température, dans lequel la texture originale du fromage est détruite par agitation rapide, moussage ou malaxage sous pression.

Les fromages obtenus de ce type ont souvent des textures plus molles et plus pâteuses que les fromages naturels.

Par ailleurs, ils sont destinés essentiellement à être étalés sur des tartines, par exemple en accompagnement de "crackers", de tacos, etc ...

La mise au point de ces produits nécessite la mise en oeuvre d'un mélange qui contient 30 à 90 % de fromage non affiné ; par ailleurs, les caractéristiques du produit final le rendent tartinable.

Le but de l'invention est de proposer un fromage nouveau obtenu par traitement d'un fromage de départ et ayant les caractéristiques aromatiques du fromage de départ mais présentant une texture souple, élastique, voire fondante en bouche, et destiné à être consommé selon les modes traditionnels, c'est-à-dire en portions découpées par le consommateur et dégustées telles quelles sans être étalées sous forme de tartines au sous forme de fromages de faible grammage (bouchée).

En outre, le produit que l'on souhaite obtenir, bien que contenant encore des germes d'affinage actifs, doit avoir une durée de conservation relativement longue. Par ailleurs, pour obtenir un fromage aussi "naturel" que possible, on cherchera à éviter l'incorporation de tout additif, tel que des agents d'émulsification.

Dans une demande de brevet précédente non publiée (EP 97 401 164) la demanderesse a déjà décrit la réalisation de produits fromagers de ce type obtenus par traitements thermique et mécanique modérés d'une matière première de départ consistant en un fromage. Le procédé impliquait la mise en oeuvre d'un agent structurant constitué par un mélange, dans un rapport déterminé d'acide sorbique (ou sorbates) et d'acide citrique (ou citrates), pour permettre la réémulsification du produit. Or, de façon tout-à-fait inattendue, les travaux des inventeurs ont montré que l'objectif de l'invention pouvait être atteint sans recourir à un agent structurant, par simple ajout d'une quantité d'eau déterminée, à la matière première de départ et en soumettant celle-ci à un traitement thermique et mécanique modérés sans addition d'autres ingrédients, de manière à obtenir des produits présentant à la fois les caractéristiques aromatiques du produit de départ et une texture fondante et onctueuse en bouche.

En effet, les travaux des inventeurs ont démontré que la réalisation d'une légère déstructuration de la matière première, par action d'un traitement thermique modéré, en présence d'une quantité d'eau déterminée suivie d'une restructuration au cours du refroidissement du produit permettrait d'obtenir des produits fromagers présentant une texture souple, onctueuse, fondante et conservant les qualités aromatiques du produit d'origine.

Pour la réalisation de l'invention la quantité d'eau rajoutée est d'au moins 7 %, de préférence d'au moins 10 % et d'au plus 20 %, de préférence d'au plus 15 % en poids par rapport au poids de la matière première d'origine.

La température de traitement thermique est comprise entre 30 et 65° C.

L'invention a ainsi pour objet un procédé de fabrication d'un produit fromager par traitement d'une matière première de départ consistant en un fromage finement divisé, comportant les étapes de :
a) traitement thermique et mécanique de type pétrissage du fromage en présence d'une quantité d'eau d'au moins 7 % en poids et d'au plus 20 % en poids, par rapport au poids de la matière première de départ, à une température T₁ d'au plus 65°C, pour obtenir une déstructuration limitée du réseau protéique du fromage de départ ;
b) refroidissement du mélange à une température T₂ située dans l'intervalle compris entre T₁ - 8°C et T₁ -20°C, avantageusement T₁ -10°C et T₁ - 15°C, les bornes étant incluses ;
c) éventuellement traitement de la pâte obtenue dans une vis sans fin de type filatrice pour finaliser la restructuration du réseau protéique ; et
d) éventuellement mise en forme de la pâte obtenue, cette dernière pouvant avoir lieu à l'issue de l'étape c) ou de l'étape a) ou b) dans le cas où l'étape c) est omise.

La température de refroidissement est choisie en fonction du traitement thermique pour la première étape. Le refroidissement du mélange permet de poursuivre la restructuration du réseau protéique et la constitution d'une émulsion stable des matières grasses avec les autres constituants.

L'étape de refroidissement est indispensable à la texturation du produit car elle permet l'émulsification de la matière grasse, le renforcement de l'élasticité de la pâte et la garantie d'une bonne qualité hygiénique des produits en évitant les zones critiques.

Pour la réalisation de l'invention, on peut partir de fromages de toute catégorie issus du lait et obtenus selon les technologies traditionnellement employées. Les fromages sont obtenus par les étapes successives suivantes :
(1) prise en masse ou coagulation du lait standardisé ou d'un concentré laitier par action d'un agent coagulant,
(2) mise en forme du caillé égoutté ou non dans des moules,
(3) égouttage spontané ou par action de la pression permettant d'obtenir l'extrait sec désiré du produit final,
(4) salage ou saumurage, qui confère à la pâte la teneur en sel souhaitée et permet la formation d'une croûte superficielle, et
(5) ressuyage, et
(6) pour les fromages à croûte naturelle, ensemencement de la surface du fromage en une flore superficielle adaptée aux types de fromages que l'on veut obtenir, et que l'on met à développer au cours d'une période d'affinage plus ou moins longue au cours de laquelle on procède à des soins favorisant la croissance de la flore.

Tous les types de fromages obtenus selon le procédé ci-dessus décrit sont adaptés à la réalisation de l'invention ; toutefois ceux possédant un extrait sec supérieur à 40 % en poids, sont préférés.

Préalablement à la déstructuration-restructuration du fromage de départ, celui-ci est divisé ou découpé en morceaux, brins, ou mis sous forme de semoule.

Avantageusement, le fromage de départ est râpé en brins de diamètre compris entre 1,5 et 3 mm, par exemple à l'aide d'une râpe habituelle du commerce. On peut également transformer le fromage de départ en semoule.

On ajoute au fromage la quantité d'eau souhaitée calculée selon l'extrait sec du produit de départ et du produit fini que l'on souhaite obtenir ; cette quantité n'excède pas 20 % en poids du fromage de départ, mais est de préférence inférieure à 15 % en poids, notamment dans le cas où l'on souhaite obtenir un produit final ayant les caractéristiques organoleptiques du produit d'origine tout en ayant une texture onctueuse et fondante en bouche.

L'étape a) est réalisée avantageusement, en soumettant le fromage de départ en morceaux, brins ou semoule après addition d'eau, à un traitement thermique doux, consistant à chauffer le produit de départ à une température comprise entre 30 et 65°C pendant une durée comprise entre 20 s et 3 min, de préférence de 45 s au plus, tout en brassant la pâte fromagère afin de réaliser un mélange homogène, sous cisaillement modéré.

Les traitements de l'étape a) sont effectués dans tout appareil approprié. On peut citer les systèmes à injection de vapeur; tels les "cutters" employés en charcuterie ou en technologie de fromage fondu et les pétrins utilisés en boulangerie.

La vitesse de brassage est avantageusement comprise entre 100 et 600 t/min, de préférence 100 et 300 t/min, pour des appareillages utilisés traditionnellement dans l'industrie fromagère. Ainsi, la vitesse de brassage est de préférence comprise entre 100 et 150 t/min pour l'hélice d'un appareillage de type "pétrin" et 250 et 300 t/min pour le couteau d'un appareillage de type "cutter".

L'étape b) est avantageusement conduite en refroidissant la pâte obtenue à une température comprise entre 25 et 50°C pendant une durée de 1 à 5 min. La température de refroidissement est dépendante de la température de chauffage mais n'est pas supérieure à 50°C.

Le traitement mécanique de l'étape b) est du même type que celui de l'étape a) bien que les conditions puissent varier dans la gamme spécifiée ci-dessus, les étapes a) et b) ont lieu avantageusement dans le même appareillage.

Avantageusement, les étapes a) et b) sont menées sous vide partiel de façon à éviter les pertes aromatiques et réduire l'oxydation du produit ; le vide est avantageusement compris entre 0,4 et 0,7 bar (0,4.10⁵ Pa et 0,7.10⁵ Pa).

La pâte obtenue peut, à l'issue de l'étape b), être transférée dans un dispositif à vis sans fin où elle subit un traitement mécanique simple destinée à compléter la restructuration du réseau protéique et stabiliser l'émulsion. Le temps de séjour dans le dispositif à vis sans fin est avantageusement compris entre 30 secondes et 5 minutes. Par traitement mécanique simple, on entend un traitement de poussée sans autre effet supplémentaire, tel que thermique ou de pression, comme c'est le cas pour l'extrusion. A l'extrémité de sortie de la vis sans fin est positionnée une formatrice.

Les produits sortant de ce dispositif sont sous des formes variables (billes, formes cylindriques, ovoïdes, etc) selon le profil de la formatrice placée à l'extrémité de sortie de la vis sans fin ; ils sont ensuite refroidis et emballés.

Les produits sortant du dispositif à vis sans fin peuvent également, à la sortie de la formatrice, être mis en moules pour conférer au produit final la forme définitive souhaitée. De façon avantageuse, on peut faire subir au produit placé dans le moule une légère opération de pressage pour améliorer le formage.

Le produit final est alors conditionné dans tout emballage approprié, enrobé avec des cires de fromagerie ou des substituts de celles-ci tels que des acétoglycérides ou des enrobages comestibles ; il peut être poussé également à la sortie de l'extrudeuse dans des coques plastiques par passage dans une mouleuse bi-coque.

Les produits obtenus sont de toute forme et de tout grammage ; avantageusement ce dernier est compris entre 1 et 500 g.

On peut également ajouter au fromage de départ des éléments alimentaires figurés d'origine végétale ou animale dans une proportion de 1 à 10 % en poids par rapport au poids de fromage.

En variante, les éléments figurés sont ajoutés à l'étape b) ou c).

Cette alternative est intéressante dans la mesure où elle permet de proposer au consommateur une gamme de produits dont les caractéristiques organoleptiques allient celles de fromages traditionnels à goût typé (goût fruité des pâtes pressées cuites par exemple) avec celui des éléments figurés (noix, noisette, pistache, arachides, morceaux de jambon, extraits végétaux, etc) en mettant en oeuvre un procédé simple et rapide.

Les produits obtenus selon ce mode de réalisation peuvent être de tout grammage et de tout format.

On peut également soumettre à l'issue de l'étape b) le mélange obtenu à partir du fromage de départ après division en morceaux ou ràpage et addition d'eau, à un traitement de foisonnement par incorporation d'azote ou tout autre gaz compatible et approprié à l'aide d'un appareil de foisonnement usuel. Dans ce cas, la pâte ne subit pas l'étape c) de traitement mécanique.

La pâte obtenue est ensuite conditionnée après mise en forme dans un moule ou déposée directement dans l'emballage définitif. On obtient ainsi tout une gamme de produits nouveaux alliant les caractéristiques gustatives du fromage de départ à une texture aérée.

Quelque soit l'alternative utilisée, on obtient aisément par le procédé de l'invention une variété de produits de tout grammage et de toute forme qui peuvent être conditionnés dans tout mode d'emballage (sachets, papier, films plastiques aluminisés, coques plastiques) ou d'enrobage (cires de fromagerie ou succédanés).

L'invention est illustrée par les exemples ci-après donnés à titre illustratif. Les pourcentages sont en poids.

Les poids des différents ingrédients sont indiqués en pourcentage par rapport au poids total de la pâte fromagère, sauf indication contraire.

### EXEMPLES :

### Exemple 1 : Fabrication d'un produit à base d'une pâte pressée demi-cuite (Maasdam)

Le fromage est râpé en brins de 2 mm de diamètre et introduit après ajout de 15% d'eau, à froid, dans une enceinte de pétrissage et de traitement thermique sous vide (cutter) ; le mélange est salé par addition de 0,6% (poids/poids) de NaCl, puis subit un brassage en cutter sous vide de 0,6 bar (0,6.10⁵ Pa) à une température de 55° C, le chambrage sous vide partiel et agitation mécanique, à la température atteinte dure 50 secondes, le produit est refroidi sous agitation mécanique réduite jusqu'à une température de 40° C sous vide partiel (0,7 bar/0,7.10⁵ Pa) pendant 2,5 minutes.

Le vide est interrompu et la masse obtenue selon les étapes précédentes, est vidangée dans un appareil à double vis, où se poursuit la restructuration du mélange, par un travail mécanique de poussée.

Cet appareil complété à l'extrémité de sortie par une formatrice, délivre des mini-pièces de 50 g, pré-formées de forme "ovoïde".

La mise en forme définitive est effectuée par un pressage instantané en moules.

Les produits ainsi obtenus subissent un refroidissement rapide dans une enceinte de réfrigération basse température (2° C).

Les produits sont ensuite démoulés à froid, puis enduits à l'aide d'une cire d'enrobage ou d'un enrobage comestible.

Les produits ainsi préparés reçoivent un sur-emballage.

### Exemple 2 : Fabrication d'un produit à base d'une pâte pressée cuite (mimolette)

La mimolette est réduite en "semoule" (grains de 0,2 mm de diamètre). La matière première ainsi préparée, est introduite à froid dans une enceinte de pétrissage et traitement sous vide (pétrin). On ajoute une quantité d'eau égale à 18 % par rapport au poids total du fromage de départ.

Le mélange obtenu est alors salé à 0,4 % (poids/poids) de NaCI.

Le mélange ainsi préparé subit :
- un brassage sous vide partiel (0,6 bar/0,6.10⁵ Pa) durant 1 mn, sous agitation mécanique puis un traitement thermique sous vide partiel (0,6 bar/0,6.10⁵ Pa) de 2 mn, sous agitation mécanique, pour atteindre une température de 50° C ;
- un chambrage, sous vide partiel (0,6 bar/0,6.10⁵ Pa), sous agitation mécanique, à la température atteinte, pendant 40 s,
- un refroidissement sous agitation mécanique réduite, sous vide partiel (0,6 bar/0,6.10⁵ Pa) jusqu'à une température de 40° C, pendant 40 s.

Le vide est interrompu.

La masse obtenue est vidangée et alimentée vers un foisonneur de type ®Mondomix.

La masse foisonnée est dosée en barquettes de 100 g, qui sont thermoscellées sous atmosphère contrôlée.

Les produits ainsi conditionnés subissent un refroidissement rapide dans une enceinte à réfrigération statique à basse température (4° C).

### Exemple 3 : Obtention de barre fromagère aux fruits secs

La matière première composée d'émmental subit à froid une réduction de taille, sous forme de brins de 1 mm de diamètre.

La matière première ainsi préparée additionnée d'une quantité de 20 % d'eau est introduite à froid dans une enceinte de pétrissage et de traitement thermique sous vide partiel.

Le mélange ainsi obtenu est alors salé avec 0,6 % (poids/poids) de NaCl.

Le mélange subit ensuite un traitement thermique sous vide partiel (0,5 bar/0,5.10⁵ Pa) sous cutter pendant 40 s, pour atteindre une température de 50° C et un chambrage, sous vide partiel (0,5 bar/0,5.10⁵ Pa), sous agitation mécanique, à cette température, pendant 50 s. Il est refroidi sous agitation mécanique réduite, jusqu'à une température de 40° C sous vide partiel (0,6 bar/0,6.10⁵ Pa) pendant 2 mn.

Le vide est interrompu.

A la masse ainsi traitée, sont alors ajoutés des éléments figurés consistant en un mélange de noisettes et d'amandes grillées et d'abricots secs.

L'ensemble obtenu est mélangé par agitation mécanique lente ménagée (environ 35 tours/min) durant 40 s pour obtenir un mélange homogène.

La masse est vidangée et mise sous forme de barres avec une doseuse/extrudeuse (poids 50 g).

Les barres ainsi obtenues subissent un refroidissement rapide dans un tunnel de réfrigération dynamique à basse température (4° C).

Les produits sont conditionnés individuellement à froid, en "flow-pack" sous gaz neutre et thermoscellés.

## Revendications

1. Procédé de fabrication d'un produit fromager par traitement d'une matière de départ consistant en un fromage comprenant les étapes suivantes :
a) traitement thermique et mécanique de type pétrissage du fromage de départ, après fractionnement de celui-ci à une température T₁ d'au plus 65°C, pour obtenir une déstructuration limitée du réseau protéique du fromage de départ,
b) refroidissement du mélange de l'étape a) à une température T₂ située dans l'intervalle compris entre T₁ - 8°C et T₁ -20°C, avantageusement T₁ - 10°C et T₁ -15°C, les bornes étant incluses ;
c) si nécessaire, traitement mécanique de la pâte obtenue en b) dans un appareillage à vis sans fin pour compléter la restructuration du réseau protéique et stabiliser l'émulsion et,
d) éventuellement, mise en forme du produit obtenu après l'étape c) ou après l'étape a) ou b) si l'étape c) est omise ;
dans lequel les étapes a) et b) sont réalisées par addition à la matière première de départ d'une quantité d'au moins 7 % en poids et d'au plus 20 % en poids d'eau par rapport au poids de la matière de départ.

2. Procédé selon la revendication 1, dans lequel le fromage est divisé en brins ou semoule avant le traitement thermique de l'étape a).

3. Procédé selon la revendication 1, dans lequel le fromage est divisé en brins ou morceaux ayant une dimension comprise entre 1,5 et 3 mm avant l'étape a).

4. Procédé selon l'une quelconque des revendications précédentes,
dans lequel le fromage de départ a un extrait sec supérieur à 40 % en poids.

5. Procédé selon l'une quelconque des revendications précédentes,
dans lequel l'étape a) est réalisée par traitement thermique et brassage du mélange constitué par le fromage de départ, et l'eau a une température comprise entre 30° C et 65° C pendant une durée comprise entre 30 s et 2 min.

6. Procédé selon l'une quelconque des revendications précédentes,
dans lequel l'étape b) est réalisée par refroidissement du mélange obtenu à l'issue de l'étape a), à une température comprise entre 25° C et 50° C, pendant une durée comprise entre 1 et 3 min.

7. Procédé selon les revendications 5 et 6, dans lequel les étapes a) et b) sont réalisées sous un vide partiel compris entre 0,4 et 0,7 bar (0,4.10⁵ Pa et 0,7.10⁵ Pa).

8. Procédé de fabrication d'un produit fromager selon l'une quelconque des revendications précédentes, dans lequel on ajoute à l'étape a), b) ou c) des éléments alimentaires figurés en une quantité comprise entre 1 et 10 % en poids.

9. Procédé de fabrication d'un produit fromager selon l'une des revendications 1 à 8, dans lequel on réalise un foisonnement de la pâte fromagère obtenue à l'issue de l'étape b), l'étape c) étant omise.

10. Produit fromager susceptible d'être obtenu à partir d'une matière de départ consistant en un fromage présentant les caractéristiques organoleptiques du fromage de départ et une texture en bouche onctueuse et fondante, susceptible d'être obtenu par le procédé selon l'une quelconque des revendications 1 à 9.

11. Produit fromager susceptible d'être obtenu à partir d'une matière de départ consistant en un fromage, et d'éléments alimentaires figurés, présentant les caractéristiques organoleptiques et texturales du fromage de départ, et desdits éléments alimentaires figurés, et susceptible d'être obtenu par le procédé selon la revendication 8.

12. Produit fromager susceptible d'être obtenu à partir d'une matière de départ consistant en un fromage présentant une texture foisonnée, et susceptible d'être obtenu par le procédé selon la revendication 9.

## Patentansprüche

1. Verfahren für die Herstellung eines Käseprodukts durch Behandeln eines aus einem Käse bestehenden Ausgangsmaterials, das die folgenden Schritte umfaßt:
a) thermisches und knetartiges mechanisches Behandeln des Ausgangskäses nach dessen Fraktionierung auf eine Temperatur T₁ von höchstens 65 °C, um eine begrenzte Destrukturierung des Proteingitters des Ausgangskäses zu erhalten,
b) Abkühlen des Gemisches des Schrittes a) auf eine Temperatur T₂, die in einem Intervall im Bereich von T₁ - 8 °C bis T₁ - 20 °C, vorteilhaft im Bereich von T₁ - 10 °C bis T₁ - 15 °C, die Grenzen eingeschlossen, liegt;
c) gegebenenfalls mechanisches Behandeln der bei b) erhaltenen Masse in einer Schneckenvorrichtung, um die Restrukturierung des Proteingitters zu vervollständigen und um die Emulsion zu stabilisieren, und
d) eventuell Formen des Produkts, das nach dem Schritt c) oder, falls der Schritt c) weggelassen wird, nach dem Schritt a) oder b) erhalten wird;
wobei die Schritte a) und b) ausgeführt werden, indem zum Aüsgangsmaterial eine Wassermenge von wenigstens 7 Gew.-% bis höchstens 20 Gew.-% in bezug auf das Gewicht des Ausgangsmaterials hinzugefügt wird.

2. Verfahren nach Anspruch 1, bei dem der Käse vor der thermischen Behandlung des Schrittes a) in Stückchen oder Körnchen zerteilt wird.

3. Verfahren nach Anspruch 1, bei dem der Käse vor dem Schritt a) in Stückchen oder Stücke mit einer Abmessung im Bereich von 1,5 bis 3 mm unterteilt wird.

4. Verfahren nach einem der vorhergehenden Ansprüche, bei dem der Ausgangskäse ein Trockenextrakt von mehr als 40 Gew.-% hat.

5. Verfahren nach einem der vorhergehenden Ansprüche, bei dem der Schritt a) während einer Dauer im Bereich von 30 s bis 2 Min durch thermische Behandlung und Umrühren des aus dem Ausgangskäse gebildeten Gemischs ausgeführt wird und das Wasser eine Temperatur im Bereich von 30 °C bis 65 °C hat.

6. Verfahren nach einem der vorhergehenden Ansprüche, bei dem der Schritt b) durch Abkühlen des am Ende des Schrittes a) erhaltenen Gemischs auf eine Temperatur im Bereich von 25 °C bis 50 °C während einer Dauer im Bereich von 1 bis 3 Min ausgeführt wird.

7. Verfahren nach den Ansprüchen 5 und 6, bei dem die Schritte a) und b) in einem Teilvakuum im Bereich von 0,4 bis 0,7 Bar (0,4 · 10⁵ Pa bis 0,7 · 10⁵ Pa) ausgerührt werden.

8. Verfahren für die Herstellung eines Käseprodukts nach einem der vorhergehenden Ansprüche, bei dem im Schritt a), b) oder c) figurierte Nahrungselemente in einer Menge im Bereich von 1 bis 10 Gew.-% hinzugefügt werden.

9. Verfahren für die Herstellung eines Käseprodukts nach einem der Ansprüche 1 bis 8, bei dem eine durch Quellen bedingte Volumenzunahme der am Ende des Schrittes b) erhaltenen Käsemasse bewirkt wird, wobei der Schritt c) weggelassen wird.

10. Käseprodukt, das aus einem Ausgangsmaterial erhalten werden kann, das aus einem Käse besteht, das die organoleptischen Eigenschaften des Ausgangskäses und eine cremige und schmelzende Geschmacksstruktur hat und durch das Verfahren nach einem der Ansprüche 1 bis 9 erhalten werden kann.

11. Käseprodukt, das aus einem Ausgangsmaterial, das aus einem Käse besteht, und aus figurierten Nahrungselementen erhalten werden kann und organoleptische und strukturelle Eigenschaften des Ausgangskäses und der figurierten Nahrungselemente besitzt und durch das Verfahren nach Anspruch 8 erhalten werden kann.

12. Käseprodukt, das aus einem Ausgangsmaterial, das aus einem Käse besteht, erhalten werden kann, eine aufgequollene Struktur aufweist und durch das Verfahren nach Anspruch 9 erhalten werden kann.

## Claims

1. Method of producing a cheese product by treatment of a starting material consisting of a cheese comprising the following steps:
a) thermal and mechanical treatment such as kneading of the starting cheese, after fractionation thereof at a temperature T₁ of at most 65°C, in order to obtain limited breakdown of the protein structure of the starting cheese,
b) cooling of the mixture from step a) at a temperature T₂ within the range from T₁ - 8°C to T₁ - 20°C, advantageously T₁ - 10°C to T₁ - 15°C, the boundary values being included;
c) if necessary, mechanical treatment of the paste obtained in b) in an endless screw apparatus in order to complete the reconstruction of the protein structure and to stabilise the emulsion, and
d) possibly shaping of the product obtained after step c) or after step a) or b) if step c) is omitted;
wherein steps a) and b) are carried out by addition to the primary starting material of a quantity of at least 7% by weight and at most 20% by weight of water relative to the weight of the starting material.

2. Method as claimed in Claim 1, wherein the cheese is divided into strands or semolina-type grains before the thermal treatment of step a).

3. Method as claimed in Claim 1, wherein the cheese is divided into strands or pieces having a dimension of between 1.5 and 3 mm before step a).

4. Method as claimed in any one of the preceding claims, wherein the starting cheese has a dry extract greater than 40% by weight.

5. Method as claimed in any one of the preceding claims, in which step a) is carried out by thermal treatment and stirring of the mixture consisting of the starting cheese and water at a temperature of between 30°C and 65°C for a duration of between 30 s and 2 min.

6. Method as claimed in any one of the preceding claims in which step b) is carried out by cooling of the mixture obtained at the end of step a) at a temperature of between 25°C and 50°C for a duration of between 1 and 3 min.

7. Method as claimed in Claims 5 and 6, wherein steps a) and b) are carried out under a partial vacuum of between 0.5 and 0.7 bars (0.4x10⁵ Pa and 0.7x10⁵ Pa).

8. Method of producing a cheese product as claimed in any one of the preceding claims, wherein figured food elements are added in a quantity of between 1 and 10% by weight at step a), b) or c).

9. Method of producing a cheese product as claimed in one of Claims 1 to 8, wherein bulking of the cheese paste obtained at the end of step b) is carried out, step c) being omitted.

10. Cheese product capable of being obtained from a starting material consisting of a cheese having the organoleptic characteristics of the starting cheese and a smooth texture which melts in the mouth, capable of being obtained by the method as claimed in any one of Claims 1 to 9.

11. Cheese product capable of being obtained from a starting material consisting of a cheese and figured food elements, having the organoleptic and textural characteristics of the starting cheese and of the said figured food elements, and capable of being obtained by the method as claimed in Claim 8.

12. Cheese product capable of being obtained from a starting material consisting of a cheese having a bulked texture and capable of being obtained by the method as claimed in Claim 9.
